(19) Europäisches Patentamt
European Patent Office
Office européen des brevets

(11) EP 4 664 711 A1

(12) EUROPEAN PATENT APPLICATION

(43) Date of publication:
17.12.2025 Bulletin 2025/51

(51) International Patent Classification (IPC):
H02J 7/00 (2006.01)       B60L 58/16 (2019.01)

(21) Application number: 24181192.6

(22) Date of filing: 10.06.2024

(52) Cooperative Patent Classification (CPC):
H02J 7/0047; B60L 3/0046; B60L 58/12;
B60L 58/16; B60L 58/22; H02J 7/0014;
H02J 7/005; H02J 7/007188; B60L 2240/545;
B60L 2240/547; B60L 2240/549; H02J 2310/48

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: VOLVO TRUCK CORPORATION
405 08 Göteborg (SE)

(72) Inventors:
• MAZZOLO, Giovanni
426 58 GÖTEBORG (SE)
• SCHIOPU, Matei
412 79 GÖTEBORG (SE)
• XU, Yang
417 47 GÖTEBORG (SE)
• ALTAF, Faisal
421 43 VÄSTRA FRÖLUNDA (SE)

(74) Representative: Kransell & Wennborg KB
P.O. Box 2096
403 12 Göteborg (SE)

(54) BALANCING OF ELECTRICAL ENERGY STORAGE STATES USING REINFORCEMENT LEARNING

(57)    A computer system (100) comprising processing circuitry (102) configured to: acquire cell data (104) from cell sensors (106) of an electrical energy storage pack (108) of an electrical energy storage system (110) of a vehicle (112), determine at least two states (118) of the cells (119) based on evaluating the cell data (104); input the at least two states as input to a reinforcement learning algorithm (116) configured to calculate control signals (120) to balance the at least two states (118) across the cells (119), and provide an output indicating the control signals (120).

Fig. 1

Processed by Luminess, 75001 PARIS (FR)

## Description

### TECHNICAL FIELD

The disclosure relates generally to electrical energy storage systems. In particular aspects, the disclosure relates to balancing of electrical energy storage states using reinforcement learning. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure can also be applied to marine applications such as vessels and boats, and to industrial applications.

### BACKGROUND

In battery systems, cell balancing methods typically rely on model-based approaches. These methods utilize precise models of cells concerning for example state of charge, SoC, or cell temperatures, SoT, to implement control-based balancing solutions, addressing each parameter individually for SoC and SoT. However, there is room for improvements with regards to methods for balancing various states of batteries.

### SUMMARY

According to a first aspect of the disclosure, there is provided a computer system comprising processing circuitry configured to: acquire cell data from cell sensors of an electrical energy storage pack of an electrical energy storage system of a vehicle, determine at least two states of the cells based on evaluating the cell data; input the at least two states as input to a reinforcement learning algorithm configured to calculate control signals to balance the at least two states across the cells, and provide an output indicating the control signals.

The first aspect of the disclosure may seek to improve balancing of states of an electrical energy storage system using a model-free approach. A technical benefit may include the ability to simultaneously balance more than one state using a model-free method that does not rely on predetermined models of the states.

Optionally in some examples, including in at least one preferred example, the processing circuitry may be further configured to: iteratively perform the steps of the method as the vehicle is travelling. A technical benefit may include the ability to provide real-time, adaptive electrical energy storage system management while the vehicle is in operation. By iteratively performing the steps of acquiring cell data, determining states, inputting states into the reinforcement learning algorithm, and providing control signals during vehicle travel, the system can dynamically adjust to changing conditions and optimize the balance of the states, such as state-of-charge (SoC), state-of-temperature (SoT), and state-of-health (SoH) in real-time. This continuous adaptation may improve performance, efficiency, and lifespan, of the electrical energy storage system.

Optionally in some examples, including in at least one preferred example, the output may indicate discharge currents to be applied to the cells. A technical benefit may include precise control over discharge currents to manage the states of the electrical energy storage cells.

Optionally in some examples, including in at least one preferred example, the states include at least two of state of charge, state of temperature, and state of health.

Optionally in some examples, including in at least one preferred example, the processing circuitry may be further configured to: simultaneously balance all of state of charge, state of temperature, and state of health.

State of health may include at least one of state of capacity (SoQ), state of resistance (SoR), and/or energy-throughput of the cells.

Optionally in some examples, including in at least one preferred example, the feedback from the cells, including estimations of the states are fed back to the reinforcement learning model, wherein the reinforcement learning model is configured to provide an action that includes the control signals. A technical benefit is that the reinforcement learning model learns directly from the measured data in an online fashion.

Optionally in some examples, including in at least one preferred example, the reinforcement learning model may be an offline reinforcement learning model that is trained in an offline session on data from cells of multiple electrical energy storage devices. A technical benefit is that a large data sample size can be provided for efficient learning of the reinforcement learning algorithm before deployment.

Optionally in some examples, including in at least one preferred example, the object of the reinforcement learning model may be to find

$$\max_{\pi} \sum_{t=0}^{\infty} \mathrm{E}_{s_t \sim P(\cdot | s_{t-1}, a_{t-1}), a_t \sim \pi(\cdot | s_t)} \left[ \gamma^t r(s_t, a_t) \right]$$

and its solution $\pi^*$, where P is the transition probability, $\pi$ is the policy, $\gamma \in [0, 1)$ is the discount factor, $r(s_t, a_t)$ are the rewards,

$$s_t = \begin{bmatrix} s_{\mathrm{SoC},t} \\ s_{\mathrm{SoT},t} \\ s_{\mathrm{SoH},t} \end{bmatrix}$$

where and $a_t$ is the action.

Optionally in some examples, including in at least one preferred example, wherein the processing circuitry is configured to: selecting an action that maximizes the reward function, feeding the obtained output to an observation update, calculate an updated observation using Q-learning, feeding the updated observation back to the reward function.

According to a second aspect of the disclosure, there is provided an electrical energy storage system comprising multiple electrical energy storage packs each comprising multiple electrical energy storage cells, and a processing circuitry configured to: acquire cell data from cells of an electrical energy storage pack of the electrical energy storage system, determine at least two states of the cells based on evaluating the cell data; input the at least two states as input to a reinforcement learning algorithm configured to calculate control signals to balance the at least two states across the cells, provide an output indicating the control signals.

The second aspect of the disclosure may seek to improve balancing of states of an electrical energy storage system using a model-free approach. A technical benefit may include the ability to simultaneously balance more than one state using a model-free method that does not rely on predetermined models of the states.

There is further provided a vehicle comprising the computer system or the electrical energy storage system.

According to a third aspect of the disclosure, there is provided a computer-implemented method, comprising: acquiring, by processing circuitry of a computer system, cell data from cell sensors of an electrical energy storage pack of an electrical energy storage system of a vehicle, determining, by the processing circuitry, at least two states of the cells based on evaluating the cell data; providing, by the processing circuitry, the at least two states as input to a reinforcement learning algorithm configured to calculate control signals to balance the at least two states across the cells, and providing, by the processing circuitry, an output indicating the control signals.

The third aspect of the disclosure may seek to improve balancing of states of an electrical energy storage system using a model-free approach. A technical benefit may include the ability to simultaneously balance more than one state using a model-free method that does not rely on predetermined models of the states.

Optionally in some examples, including in at least one preferred example, the method may further comprise: iteratively perform the steps of the method as the vehicle is travelling. A technical benefit may include the ability to provide real-time, adaptive electrical energy storage system management while the vehicle is in operation. By iteratively performing the steps of acquiring cell data, determining states, inputting states into the reinforcement learning algorithm, and providing control signals during vehicle travel, the system can dynamically adjust to changing conditions and optimize the balance of the states, such as state-of-charge (SoC), state-of-temperature (SoT), and state-of-health (SoH) in real-time. This continuous adaptation may improve performance, efficiency, and lifespan, of the electrical energy storage system.

Optionally in some examples, including in at least one preferred example, the output may indicate discharge currents to be applied to the cells. A technical benefit may include precise control over discharge currents to manage the states of the electrical energy storage cells.

Optionally in some examples, including in at least one preferred example, the states include at least two of state of charge, state of temperature, and state of health.

Optionally in some examples, including in at least one preferred example, the processing circuitry may be further configured to: simultaneously balance all of state of charge, state of temperature, and state of health.

State of health may include at least one of state of capacity (SoQ), state of resistance (SoR), and/or energy-throughput of the cells.

Optionally in some examples, including in at least one preferred example, the feedback from the cells, including estimations of the states are fed back to the reinforcement learning model, wherein the reinforcement learning model is configured to provide an action that includes the control signals. A technical benefit is that the reinforcement learning model learns directly from the measured data in an online fashion.

Optionally in some examples, including in at least one preferred example, the reinforcement learning model may be an offline reinforcement learning model that is trained in an offline session on data from cells of multiple electrical energy storage devices. A technical benefit is that a large data sample size can be provided for efficient learning of the reinforcement learning algorithm before deployment.

Optionally in some examples, including in at least one preferred example, the object of the reinforcement learning model may be to find

$$\max_{\pi} \sum_{t=0}^{\infty} \mathrm{E}_{s_t \sim P(\cdot|s_{t-1}, a_{t-1}), a_t \sim \pi(\cdot|s_t)} \left[ \gamma^t r(s_t, a_t) \right]$$

and its solution $\pi^*$, where P is the transition probability, $\pi$ is the policy, $\gamma \in [0, 1)$ is the discount factor, $r(s_t, a_t)$ are the rewards,

$$s_t = \begin{bmatrix} s_{\mathrm{SoC},t} \\ s_{\mathrm{SoT},t} \\ s_{\mathrm{SoH},t} \end{bmatrix}$$

where and $a_t$ is the action.

Optionally in some examples, including in at least one preferred example, the method may comprise to iteratively: selecting an action that maximizes the reward function, feeding the obtained output to an observation update, calculate an updated observation using Q-learning, feeding the updated observation back to the reward function.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

**FIG. 1** is an exemplary system diagram of a computer system according to an example.

**Fig. 2** is a box diagram of an online version of the reinforcement learning algorithm applied to an electrical energy storage system according to an example.

**Fig. 3** is a box diagram of an offline version of the reinforcement learning algorithm trained on data from multiple electrical energy storage devices according to an example.

**FIG. 4** is a flow chart of an exemplary method to balance electrical energy storage cells according to an example.

**FIG. 5** is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

In electrical energy storage systems comprising multiple packs and cells, it is desirable to balance parameters of the packs and cells. For example, in order to fully utilize the capacity of the electrical energy storage system and not be limited by the weakest cell or pack, one typically balances the state of charge of the packs. Balancing using traditional techniques involves using precise models of the parameter or state that is being modelled, such as for example state of charge, SoC.

With the present invention, a model-free approach is suggested which offers the flexibility to balance more than one parameter or state, and also to balance parameters or states that are difficult to model with traditional techniques, such as state of health.

State of health may be defined as the loss in capacity relative to a capacity at the beginning of life of the electrical energy storage pack or cell, i.e., state of capacity (SoQ), or the internal resistance increase of the electrical energy storage pack or cell relative the internal resistance at the beginning of life of the battery, i.e., state of resistance (SoR). Further, state of health may equally be defined of loss in range, loss in peak acceleration capability, efficiency loss etc.

State of health parameters that may be measured for determining a state of health may include at least a state of capacity and a state of resistance of the electrical energy storage pack or cell. These state of health parameters are well established and advantageously relatively straight-forward to measure and are typically available from management systems of automotive electrical energy storage systems.

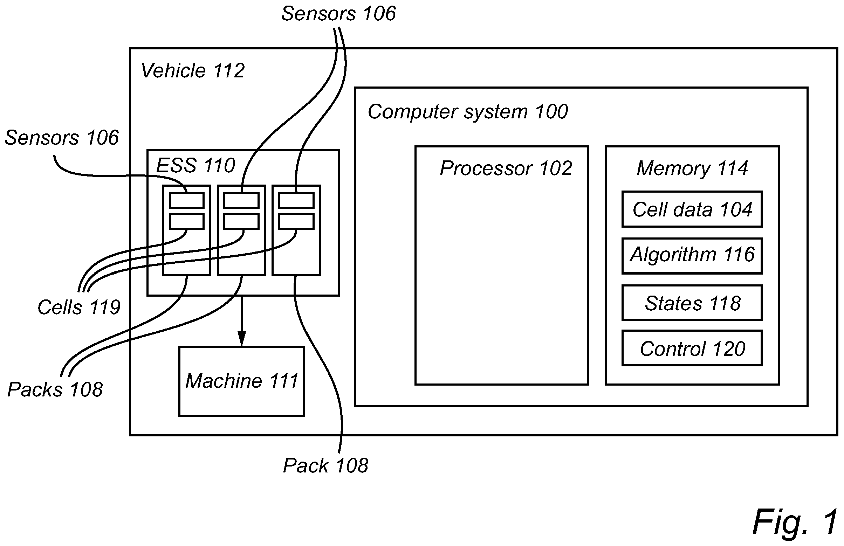

**FIG. 1** is an exemplary system diagram of a computer system 100 according to an example.

The computer system 100 comprises a processing circuitry 102 configured to acquire cell data 104 from cell sensors 106 of an electrical energy storage pack 108 of an electrical energy storage system 110 of a vehicle 112. The electrical energy storage system 110 is here arranged to provide traction power to an at least partly electrified driveline of the vehicle 112 comprising an electric machine 111.

The sensors 106 are configured to measure for example electrical currents, voltages, temperatures, and other parameters required for estimating for example SoC, temperature, and SoH of the electrical energy storage cells 119 of electrical energy storage packs 108. The processing circuitry 102 acquires the cell data 104 and stores it in a memory 114. The memory further stores a reinforcement learning algorithm/model 116 that is accessible to the processing circuitry 102. The reinforcement learning algorithm 116 may include any one of an online reinforcement learning algorithm 116a and an offline reinforcement learning algorithm 116b, as will be described further below.

The processing circuitry 102 is configure determine at least two states 118 of the cells 119 based on evaluating the cell data. The states include at least two of state of charge, state of temperature, and state of health. In some examples, all three of all of state of charge, state of temperature, and state of health are simultaneously considered.

The states are used as an input to the reinforcement learning algorithm 116 configured to calculate control signals 120 to balance the at least two states across the cells. That is, the reinforcement learning algorithm 116 uses the states, and a reward function to determine an action to optimize the reward function so that for example state of charge and state of health are simultaneously balanced. This process may be iteratively performed while the vehicle is under operation.

The processing circuitry 102 continuously, at each iteration, provides an output that indicates the control signals 120. Preferably, the output indicates discharge currents to be applied to the cells of the electrical energy storage packs 108.

To balance a state across the cells means to minimize the differences in that state among the cells of a single electrical energy storage pack. Stated otherwise, to balance means to homogenize the state across the cells. For example, to balance SoC or SoH across all cells means to minimize the difference in SoC across all cells and at the same time minimize the difference in SoH across all cells. Herein, the algorithm 116 allows for balancing two states simultaneously. As an example, SoC and SoH may both be balanced across the cells in an optimal way.

There is further herein provided an electrical energy storage system 110 comprising multiple electrical energy storage packs 108 each comprising multiple electrical energy storage cells, and a processing circuitry 102 configured to: acquire cell data 104 from cells of an electrical energy storage pack 108 of the electrical energy storage system, determine at least two states 118 of the cells based on evaluating the cell data 104; input the at least two states as input to a reinforcement learning algorithm 116 configured to calculate control signals 120 to balance the at least two states across the cells, provide an output indicating the control signals 120.

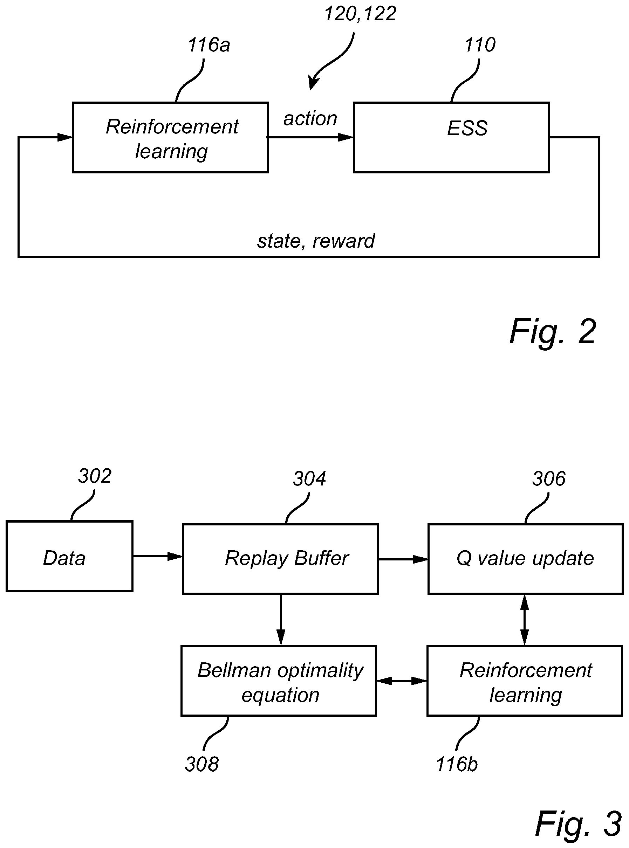

FIG. 2 is a box diagram of an online version of the reinforcement learning algorithm applied to an electrical energy storage system 110. The feedback from the cells, including estimations of the states are fed back to the reinforcement learning algorithm 116a that is configured to provide an action, $a_t$ 122 that includes the control signals 120.

The object of the reinforcement learning model 116a is to find:

$$\max_{\pi} \sum_{t=0}^{\infty} \mathbb{E}_{s_t \sim P(\cdot|s_{t-1}, a_{t-1}),\, a_t \sim \pi(\cdot|s_t)} \left[ \gamma^t r\left(s_t,\, a_t\right) \right]$$

and its solution $\pi^*$, where $P$ is the transition probability, $\pi$ is the policy, $\gamma \in [0, 1)$ is the discount factor, $r(s_t, a_t)$ are the rewards,

$$s_t = \begin{bmatrix} s_{\text{SoC},t} \\ s_{\text{SoT},t} \\ s_{\text{SoH},t} \end{bmatrix}$$

where                are the states, and $a_t$ is the action. The action is the electrical discharge currents to be withdrawn from the cells.

For online reinforcement learning, an initial Q-table is initiated and the following steps are executed iteratively. The initial Q-table may be learnt from previous sessions or initiated as zeros.

Firstly, the processing circuitry 102 selects a policy $\pi$ that maximizes the reward function by using:

$$V_Q(s) = max_{a \in A} Q(s, a). \qquad (1)$$

The obtained policy is fed to an observation update function that is used to calculate an updated observation $\hat{Q}^\pi$ given as (2):

$$\hat{Q}^{\pi} = \arg \min_{Q} \mathbb{E}_{s_t \sim P(\cdot|s_{t-1}, a_{t-1}), a_t \sim \pi(\cdot|s_t)} \{Q(s_t, a_t) -$$

$$[r(s_t, a_t) + \gamma \mathbb{E}_{s_{t+1} \sim P(\cdot|s_t, a_t), a_{t+1} \sim \pi(\cdot|s_{t+1})} Q(s_{t+1}, a_{t+1})]\}^2 .$$

The updated $\hat{Q}^{\pi}$ is fed to action selection by again using the rewards function (1), that is, to select discharge currents for the different cells.

Equation (2) for calculating an updated $\hat{Q}^{\pi}$ includes a difference between the Q value starting from the current action and states, $Q(s_t, a_t)$, and the sum of the current reward, $r(s_t, a_t)$, and the discounted future optimal Q value:

$$\gamma \mathbb{E}_{s_{t+1} \sim P(\cdot|s_t, a_t), a_{t+1} \sim \pi(\cdot|s_{t+1})} Q(s_{t+1}, a_{t+1})]$$

The future optimal Q value, $Q(s_{t+1}, a_{t+1})$ is based on the action selected from equation (1).

The difference between the Q value starting from the current action and states, $Q(s_t, a_t)$, and the sum of the current reward, $r(s_t, a_t)$, and the discounted future optimal Q value is adapted to make the current policy, that is the current action of providing discharging current converge to the policy, or action of discharging current, calculated in equation (1). In other words, by iterating equation (1) and (2), the optimal discharging current is achieved.

**FIG. 3** is a box diagram of an offline version of the reinforcement learning algorithm implementation trained on data 302 from multiple electrical energy storage devices. The data 302 is existing data from vehicles or from a laboratory and includes SoC data, temperature data, SoH data, and electric current data. A replay buffer 304 is used for selecting a large number of data tuples $(s_t, a_t, s_{t+1}, r_t)$ from the dataset 302 for offline training of the reinforcement learning algorithm 116b.

Also in this case is the object of the reinforcement learning model 116b is to find:

$$\max_{\pi} \sum_{t=0}^{\infty} \mathbb{E}_{s_t \sim P(\cdot|s_{t-1}, a_{t-1}), a_t \sim \pi(\cdot|s_t)} [\gamma^t r(s_t, a_t)]$$

and its solution $\pi^*$, where P is the transition probability, $\pi$ is the policy, $\gamma \in [0, 1)$ is the discount factor, $r(s_t, a_t)$ are the rewards,

$$s_t = \begin{bmatrix} s_{\mathrm{SoC},t} \\ s_{\mathrm{SoT},t} \\ s_{\mathrm{SoH},t} \end{bmatrix}$$

where and $a_t$ is the action.

Firstly, the processing circuitry 102 selects an action $\pi$ that maximizes the reward function by using:

$$V_Q(s) = max_{a \in A} Q(s, a). \quad (1)$$

The obtained policy is fed to an observation update function that is used to calculate an updated observation $\hat{Q}^{\pi}$ given as (3):

$$\hat{Q}^{\pi} = \arg \min_{Q} \{\mathbb{E}_{s_t \sim P(\cdot|s_{t-1}, a_{t-1}), a_t \sim \pi(\cdot|s_t)} \{Q(s_t, a_t) -$$

$$[r(s_t, a_t) + \gamma \mathbb{E}_{s_{t+1} \sim P(\cdot|s_t, a_t), a_{t+1} \sim \pi(\cdot|s_{t+1})} Q(s_{t+1}, a_{t+1})]\}^2 +$$

$$\alpha \mathbb{E}_{s_t \sim P(\cdot|s_{t-1}, a_{t-1}), a_t \sim \pi(\cdot|s_t)} Q(s_t, a_t)\}$$

In this equation, $\alpha > 0$. The updated $\hat{Q}^{\pi}$ is fed to action selection by again using the rewards function (1), that is, to select discharge currents for the different cells.

The difference between the equation (2) used for online reinforcement learning and the equation (3) used for offline reinforcement learning, is the third term given by:

$$\alpha \mathbb{E}_{s_t \sim P(\cdot|s_{t-1}, a_{t-1}), a_t \sim \pi(\cdot|s_t)} Q(s_t, a_t)\}$$

This third term is used to penalize large Q-values and is used to limit the action within the data's action space. In other words, it is used to limit the searched discharging current within the discharging current range from the existing data 302.

The data selected in the replay buffer 304 is used in equations (1) and (3) described above to update the Q value 306. In this example, the Bellman optimality equation 308 is used to solve the optimization problem in equation (1) although other optimizers may also be envisaged.

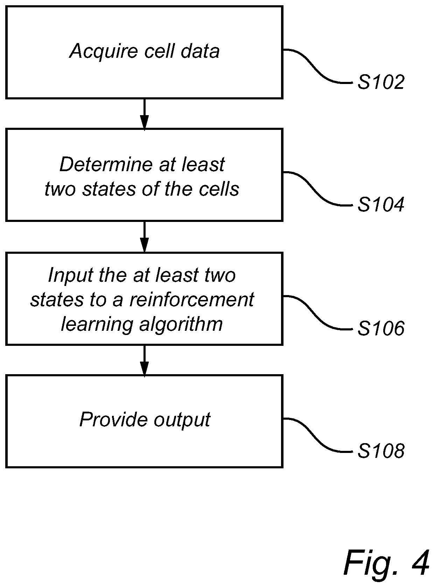

FIG. 4 is a flow-chart of a computer-implemented method according to an example.

In step S102, acquiring, by processing circuitry 102 of a computer system 100, cell data 104 from cell sensors 106 of an electrical energy storage pack 108 of an electrical energy storage system 110 of a vehicle 112.

In step S104, determining, by the processing circuitry 102, at least two states 118 of the cells based on evaluating the cell data 104.

In step S106, providing, by the processing circuitry 102, the at least two states 118 as input to a reinforcement learning algorithm 116 configured to calculate control signals 120 to balance the at least two states 118 across the cells.

In step S108, providing, by the processing circuitry 102, an output indicating the control signals. The output indicates discharge currents to be applied to the cells.

The method in fig. 4 may be iteratively performing, by the processing circuitry, the as the vehicle 112 is travelling.

The states 118 may include at least two of state of charge, state of temperature, and state of health. In fact, the method may include to simultaneously balance all of state of charge, state of temperature, and state of health.

The feedback from the cells, including estimations of the states are preferably fed back to the reinforcement learning model 116, wherein the reinforcement learning model 116 is configured to provide an action that includes the control signals.

In the method, the reinforcement learning model may be an offline reinforcement learning model that is trained in an offline session on data from cells of multiple electrical energy storage devices.

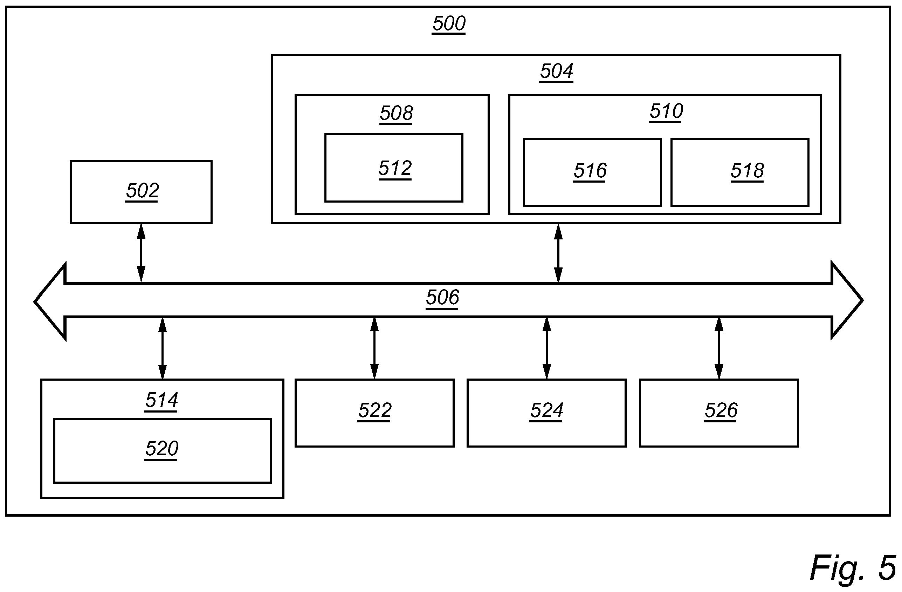

FIG. 5 is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g.,

read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (100) comprising processing circuitry (102) configured to: acquire cell data (104) from cell sensors (106) of an electrical energy storage pack (108) of an electrical energy storage system (110) of a vehicle (112), determine at least two states (118) of the cells (119) based on evaluating the cell data (118); input the at least two states as input to a reinforcement learning algorithm (116) configured to calculate control signals (120) to balance the at least two states (118) across the cells (119), and provide an output indicating the control signals (120).

Example 2: The computer system of example 1, wherein the processing circuitry is further configured to: iteratively perform the steps of example 1 as the vehicle is travelling.

Example 3: The computer system of any of examples 1-2, wherein the output indicates discharge currents to be applied to the cells.

Example 4: The computer system of any of examples 1-3, wherein the states include at least two of state of charge, state of temperature, and state of health.

Example 5: The computer system of example 4, wherein the processing circuitry is further configured to: simultaneously balance all of state of charge, state of temperature, and state of health.

Example 6: The computer system of any one of examples 1 to 5, wherein the feedback from the cells, including estimations of the states are fed back to the reinforcement learning model (116a), wherein the reinforcement learning model is configured to provide an action that includes the control signals.

Example 7: The computer system of any one of examples 1 to 5, wherein the reinforcement learning model is an offline reinforcement learning model (116b) that is trained in an offline session on data (302) from cells of multiple electrical energy storage systems.

Example 8: The computer system of any one of examples 1 to 7, wherein the object of the reinforcement learning model is to find

$$\max_{\pi} \sum_{t=0}^{\infty} \mathrm{E}_{s_t \sim P(\cdot|s_{t-1}, a_{t-1}), a_t \sim \pi(\cdot|s_t)}\left[\gamma^t r(s_t, a_t)\right]$$

and its solution $\pi^*$, where $P$ is the transition probability, $\pi$ is the policy, $\gamma \in [0, 1)$ is the discount factor, $r(s_t, a_t)$ are the rewards,

$$s_t = \begin{bmatrix} s_{\mathrm{SoC},t} \\ s_{\mathrm{SoT},t} \\ s_{\mathrm{SoH},t} \end{bmatrix}$$

where  and $a_t$ is the action.

Example 9: The computer system of any one of examples 1 to 8, wherein the processing circuitry is configured to iteratively: select an action that maximizes the reward function, feed the obtained output to an observation update, calculate an updated observation using Q-learning, and feed the updated observation back to the reward function.

Example 10: An electrical energy storage system comprising multiple electrical energy storage packs each comprising multiple electrical energy storage cells, and a processing circuitry configured to: acquire cell data from cells of an electrical energy storage pack of the electrical energy storage system, determine at least two states of the cells based on evaluating the cell data; input the at least two states as input to a reinforcement learning algorithm configured to calculate control signals to balance the at least two states across the cells, provide an output indicating the control signals.

Example 11: A vehicle comprising the computer system of any of examples 1-9 or an electrical energy storage system according to example 10.

Example 12: A computer-implemented method, comprising: acquiring, by processing circuitry of a computer system, cell data from cell sensors of an electrical energy storage pack of an electrical energy storage system of a vehicle, determining, by the processing circuitry, at least two states of the cells based on evaluating the cell data; providing , by the processing circuitry, the at least two states as input to a reinforcement learning algorithm configured to calculate control signals to balance the at least two states across the cells, and providing, by the processing circuitry, an output indicating the control signals.

Example 13: The method example 12, comprising: iteratively performing, by the processing circuitry, the steps of example 12 as the vehicle is travelling.

Example 14: The method of any of examples 12-13, wherein the output indicates discharge currents to be applied to the cells.

Example 15: The method of any of examples 12-14, wherein the states include at least two of state of charge, state of temperature, and state of health.

Example 16: The method of example 15, comprising: simultaneously balancing all of state of charge, state of temperature, and state of health.

Example 17: The method of any one of examples 12 to 16, wherein the feedback from the cells, including estimations of the states are fed back to the reinforcement learning model, wherein the reinforcement learning model is configured to provide an action that includes the control signals.

Example 18: The method of any one of examples 12 to 16, wherein the reinforcement learning model is an offline reinforcement learning model that is trained in an offline session on data from cells of multiple electrical energy storage devices.

Example 19: The method of any one of examples 12 to 18, wherein the object of the reinforcement learning model is to find

$$\max_{\pi} \sum_{t=0}^{\infty} \mathrm{E}_{s_t \sim P(\cdot|s_{t-1}, a_{t-1}), a_t \sim \pi(\cdot|s_t)}\left[\gamma^t r(s_t, a_t)\right]$$

and its solution $\pi^*$, where $P$ is the transition probability, $\pi$ is the policy, $\gamma \in [0, 1)$ is the discount factor, $r(s_t, a_t)$ are the rewards,

$$s_t = \begin{bmatrix} s_{\mathrm{SoC},t} \\ s_{\mathrm{SoT},t} \\ s_{\mathrm{SoH},t} \end{bmatrix}$$

where  and $a_t$ is the action.

Example 20: The method of any of examples 12-19, wherein the method further comprises to iteratively: selecting an action that maximizes the reward function, feeding the obtained output to an observation update, calculate an updated observation using Q-learning, and feeding the updated observation back to the reward function.

Example 21: A computer program product comprising program code for performing, when executed by the processing circuitry, the method of any of examples 12-20.

Example 22: A non-transitory computer-readable storage medium comprising instructions, which when executed by the processing circuitry, cause the processing circuitry to perform the method of any of examples 12-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (100) comprising processing circuitry (102) configured to:

   acquire cell data (104) from cell sensors (106) of an electrical energy storage pack (108) of an electrical energy storage system (110) of a vehicle (112),
   determine at least two states (118) of the cells (119) based on evaluating the cell data (104);
   input the at least two states as input to a reinforcement learning algorithm (116) configured to calculate control signals (120) to balance the at least two states (118) across the cells (119), and
   provide an output indicating the control signals (120).

2. The computer system of claim 1, wherein the processing circuitry is further configured to:
   iteratively perform the steps of claim 1 as the vehicle is travelling.

3. The computer system of any of claims 1-2, wherein the output indicates discharge currents to be applied to the cells.

4. The computer system of any of claims 1-3, wherein the states include at least two of state of charge, state of temperature, and state of health.

5. The computer system of claim 4, wherein the processing circuitry is further configured to: simultaneously balance all of state of charge, state of temperature, and state of health.

6. The computer system of any one of claims 1 to 5, wherein the feedback from the cells, including estimations of the states are fed back to the reinforcement learning model (116a), wherein the reinforcement learning model is configured to provide an action that includes the control signals.

7. The computer system of any one of claims 1 to 5, wherein the reinforcement learning model is an offline reinforcement learning model (116b) that is trained in an offline session on data (302) from cells of multiple electrical energy storage systems.

8. The computer system of any one of claims 1 to 7, wherein the object of the reinforcement learning model is to find

$$\max_{\pi} \sum_{t=0}^{\infty} \mathrm{E}_{s_t \sim P(\cdot | s_{t-1}, a_{t-1}), a_t \sim \pi(\cdot | s_t)} \left[ \gamma^t r(s_t, a_t) \right]$$

and its solution $\pi^*$, where P is the transition probability, $\pi$ is the policy, $\gamma \in [0, 1)$ is the discount factor, $r(s_t, a_t)$ are the

$$s_t = \begin{bmatrix} s_{\mathrm{SoC},t} \\ s_{\mathrm{SoT},t} \\ s_{\mathrm{SoH},t} \end{bmatrix}$$

rewards, where and $a_t$ is the action.

9. The computer system of any one of claims 1 to 8, wherein the processing circuitry is configured to iteratively:

   select an action that maximizes the reward function,
   feed the obtained output to an observation update,
   calculate an updated observation using Q-learning, and
   feed the updated observation back to the reward function.

10. An electrical energy storage system comprising multiple electrical energy storage packs each comprising multiple electrical energy storage cells, and a processing circuitry configured to:

    acquire cell data from cells of an electrical energy storage pack of the electrical energy storage system,
    determine at least two states of the cells based on evaluating the cell data;
    input the at least two states as input to a reinforcement learning algorithm configured to calculate control signals to balance the at least two states across the cells,
    provide an output indicating the control signals.

11. A vehicle comprising the computer system of any of claims 1-9 or an electrical energy storage system according to claim 10.

12. A computer-implemented method, comprising:

    acquiring (S102), by processing circuitry (102) of a computer system (100), cell data (104) from cell sensors (106) of an electrical energy storage pack (108) of an electrical energy storage system (110) of a vehicle,
    determining (S104), by the processing circuitry (102), at least two states (118) of the cells (119) based on evaluating the cell data (104);
    providing (S106), by the processing circuitry (102), the at least two states (118) as input to a reinforcement learning algorithm (116) configured to calculate control signals to balance the at least two states across the cells (119), and
    providing (S108), by the processing circuitry, an output indicating the control signals (120).

13. The method of claim 12, comprising:
    simultaneously balancing all of state of charge, state of temperature, and state of health.

14. A computer program product comprising program code for performing, when executed by the processing circuitry, the method of any of claims 12-13.

**15.** A non-transitory computer-readable storage medium comprising instructions, which when executed by the processing circuitry, cause the processing circuitry to perform the method of any of claims 12-13.

Fig. 1

Fig. 2

Fig. 3

Acquire cell data ⸺ *S102*

Determine at least
two states of the cells ⸺ *S104*

Input the at least two
states to a reinforcement
learning algorithm ⸺ *S106*

Provide output ⸺ *S108*

*Fig. 4*

*Fig. 5*

EP 4 664 711 A1

Europäisches
Patentamt

European
Patent Office

Office européen
des brevets

**EUROPEAN SEARCH REPORT**

**Application Number**

EP 24 18 1192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 613 421 A (BEIJING CHINA RAILWAY CONSTRUCTION ELECTRIFICATION DESIGN & RES INSTIT) 27 February 2024 (2024-02-27) | 1-4,6,7, 9-12,14, 15 | INV. H02J7/00 B60L58/16 |
| Y | * abstract *<br>* figures 1, 2, 3 *<br>* paragraphs [0013], [0016], [0017], [0036], [0037], [0039], [0061] *<br>* paragraph [0013] - paragraph [0017] *<br>* paragraph [0017] - paragraph [0033] *<br>* paragraph [0039] - paragraph [0044] *<br>* paragraph [0052] - paragraph [0053] *<br>* paragraph [0057] - paragraph [0061] *<br>----- | 5,8,13 | |
| X | HARWARDT KATHARINA ET AL: "Lithium-Ion Battery Management System with Reinforcement Learning for Balancing State of Charge and Cell Temperature", 2023 IEEE BELGRADE POWERTECH, IEEE, 25 June 2023 (2023-06-25), pages 1-6, XP034393918, DOI: 10.1109/POWERTECH55446.2023.10202845 [retrieved on 2023-08-09] | 1,3,4,6, 9-12 | |
| Y | * abstract *<br>* figure 2 a) and b) *<br>* figures 3, 4, 5, 6 *<br>* Section: IV.C *<br>* Sections: III, IV and V *<br>----- | 5,8,13 | TECHNICAL FIELDS SEARCHED (IPC)<br><br>H02J<br>B60L |
| A | EP 3 995 346 A1 (TATA CONSULTANCY SERVICES LTD [IN]) 11 May 2022 (2022-05-11) * abstract; figures 1, 2, 3, 4, 5 * * paragraph [0015] - paragraph [0033] * ----- | 1 | |
| | -/-- | | |

The present search report has been drawn up for all claims

| Place of search | Date of completion of the search | Examiner |
|---|---|---|
| Munich | 6 November 2024 | Oiring, Vinicius |

EPO FORM 1503 03.82 (P04C01)

**page 1 of 2**

| | Europäisches Patentamt European Patent Office Office européen des brevets | **EUROPEAN SEARCH REPORT** | **Application Number** EP 24 18 1192 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARDESHIRI REZA ROUHI ET AL: "Machine Learning Approaches in Battery Management Systems: State of the Art: Remaining useful life and fault detection", 2020 2ND IEEE INTERNATIONAL CONFERENCE ON INDUSTRIAL ELECTRONICS FOR SUSTAINABLE ENERGY SYSTEMS (IESES), IEEE, vol. 1, 1 September 2020 (2020-09-01), pages 61-66, XP033833960, DOI: 10.1109/IESES45645.2020.9210642 [retrieved on 2020-09-30] * figures 2, 3 * * sections: II, III and IV * ----- | 6 | |
| | | | TECHNICAL FIELDS SEARCHED (IPC) |

The present search report has been drawn up for all claims

| Place of search | Date of completion of the search | Examiner |
|---|---|---|
| Munich | 6 November 2024 | Oiring, Vinicius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# EP 4 664 711 A1

## ANNEX TO THE EUROPEAN SEARCH REPORT
## ON EUROPEAN PATENT APPLICATION NO.

EP 24 18 1192

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | Publication date |
|---|---|---|---|
| CN 117613421 A | 27-02-2024 | NONE | |
| EP 3995346 A1 | 11-05-2022 | EP 3995346 A1 | 11-05-2022 |
| | | US 2022149645 A1 | 12-05-2022 |

EPO FORM P0459

For more details about this annex : see Official Journal of the European Patent Office, No. 12/82